# EUROPEAN PATENT APPLICATION

(11) **EP 2 463 812 A1**
(43) Date of publication of application: **13.06.2012**
(21) Application number: 11250918.7
(22) Date of filing: 05.12.2011
(51) Int. Cl.: G06Q 10/04, G06Q 10/06

(54) **Scheduling the maintenance of operational equipment**

(30) Priority: 07.12.2010 GB 201020670
(71) Applicant: Vantage Point Technologies LTD, Rainton Bridge South Business Park Houghton le Spring Tyne and Wear DH4 5QY (GB)
(72) Inventor: Fourie, Ian Malcolm, Hartlepool, TS27 3JA (GB)
(74) Representative: Hutchinson, Claire Louise

(57) **Abstract**

The scheduling of maintenance for operational equipment is disclosed in which the operational equipment is distributed over many locations. Operational data relating to the use of operational equipment is received, along with equipment failure data. Stored operational data (501) is analysed (503) in combination with stored operational equipment failure data (502) to determine performance information (504) relating to extensive use of the operational equipment to rates of failure of operational equipment. New operational data is processed (505) along with equipment failure data in combination with the relationship information (504) to produce knowledge based output alert (506 to 509) and maintenance schedules (510).

## Description

### CROSS REFERENCE TO RELATED APPLICATIONS

This application claims priority from United Kingdom Patent Application No. 10 20 670.4, filed December 07, 2010, the entire disclosure of which is incorporated herein by reference in its entirety.

### BACKGROUND OF THE INVENTION

### 1. Field of the Invention

The present invention relates to a method of scheduling the maintenance of operational equipment distributed over a plurality of locations. The present invention also relates to apparatus for scheduling the maintenance of operational equipment distributed over a plurality of locations. The present invention also relates to a maintenance schedule identifying work intervals, geographical locations within said work intervals and operational equipment to be maintained within each of said geographical locations.

### 2. Description of the Related Art

Many types of operational equipment are known that require maintenance to be performed at regular intervals. The rate at which maintenance is required often depends upon the extent to which the operational equipment is used. Thus, in buildings with elevators, the time interval between maintenance activities will depend to a large degree upon the extent to which the elevators are used. Thus, if an elevator is used rarely it is possible for maintenance intervals to be extended. Alternatively, if an elevator is used regularly, such as being in constant use throughout a working day, a more regular maintenance regime will be required. Furthermore, it is also understood that differing models of equipment and differing manufactures will require different maintenance regimes. Furthermore, it is also understood that in many situations a trade-off exists in terms of the cost of the equipment's capital outlay compared to ongoing running costs. Thus, it may be possible to reduce initial outlay by using less robust equipment, however, with heavy use, it is likely that a greater number of maintenance activities will be required.

It is also known for maintenance teams to be responsible for operational equipment residing at different geographical locations. Many examples of the equipment may exist at each location and many different locations may require maintenance to be performed over a working year for example. In many situations, operational equipment is operated until a fault condition occurs, whereupon a maintenance team is requested and the fault is rectified. Call outs of this type are therefore inefficient in that better use of time spent could be made if it were possible to perform several maintenance activities in a single trip.

### BRIEF SUMMARY OF THE INVENTION

According to an aspect of the present invention, there is provided a method of scheduling the maintenance of operational equipment distributed over a plurality of locations, comprising the steps of receiving operational data relating to use of operational equipment, receiving operational equipment failure data, analysing said operational data in combination with said operational equipment failure data to determine performance information relating extent of use of said operational equipment to rates of failure of operational equipment, and processing new operational data and operational equipment failure data in combination with said relationship information to produce knowledge-based output alerts and maintenance schedules.

According to another aspect of the present invention, there is provided an apparatus for scheduling the maintenance of operational equipment distributed over a plurality of locations, comprising first storage for storing operational data identifying use of operational equipment, second storage for storing equipment failure data for said operational equipment, and at least one data analysis processor configured to analyse said operational data in combination with said equipment failure data to determine performance information relating extent of use of said operational equipment to rates of failure of said operational equipment, third storage for said performance information, and at least one data monitoring processor configured to monitor new operational data and new equipment failure data with reference to said performance data to produce knowledge-based output alerts and maintenance schedules.

### BRIEF DESCRIPTION OF THE DRAWINGS

Figure 1 shows maintenance scheduling stations and operational locations;

Figure 2 details an operational location, of the type identified in Figure 1;

Figure 3 shows an example of a data packet;

Figure 4 details a maintenance scheduling stations of the type identified in Figure 1;

Figure 5 details the data analysis and monitoring process identified in Figure 4;

Figure 6 details the equipment attribute table identified in Figure 5;

Figure 7 identifies a contractor table contained within the data analysis module identified in Figure 5;

Figure 8 illustrates the storage of operational data;

Figure 9 illustrates a first stage of data analysis;

Figure 10 shows an equipment performance table;

Figure 11 illustrates a second mode of operation for identifying unusual failure conditions;

Figure 12 illustrates the failure table identified in Figure 5;

Figure 13 illustrates procedures for analysing the failure table detailed in Figure 12;

Figure 14 illustrates alert tables;

Figure 15 illustrates procedures for the generation of a maintenance table; and

Figure 16 illustrates a maintenance table and a maintenance schedule.

### DETAILED DESCRIPTION OF EXAMPLE EMBODIMENTS

### Figure 1

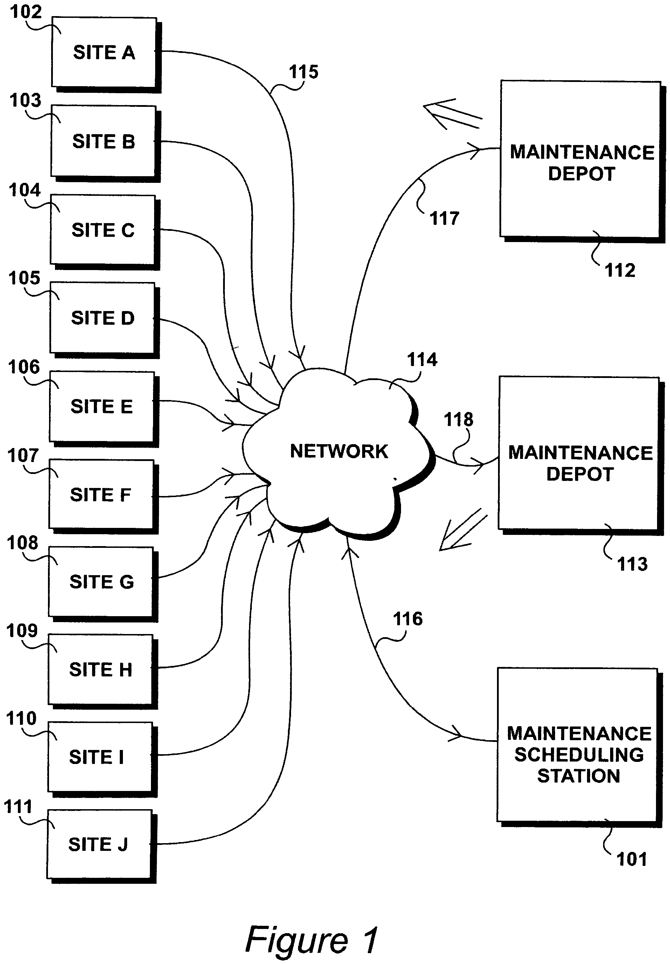

A maintenance scheduling station **101** is shown in Figure 1, suitable for scheduling the maintenance of operational equipment distributed over many locations. In the example shown in Figure 1, operational equipment is resident at site A **102,** site B **103,** site C **104,** site D **105,** site E 106, site F **107,** site G 108, site H 109, site I **110** and site J **111.** However, in practice, it is possible for the number of sites present to run into the hundreds.

The number of operational equipment items present at each site may also run into the hundreds and periodically it is necessary for maintenance activities to be performed upon this operational equipment. The operational equipment itself could take many forms. As an example, each item of operational equipment may take the form of an elevator and each site may take the form of a high-rise building. Thus, for example site A could be a department store with fifteen elevators located therein.

The maintenance scheduling station **101** may be responsible for generating schedules nationally. To facilitate administration, the national area of coverage may be divided into geographical regions and it is possible that maintenance contracts could be established at this regional level. Furthermore, within each region, one or more maintenance depots may be provided and in an embodiment a maintenance schedule is generated for each maintenance depot.

For the purposes of illustration, Figure 1 may be considered to represent a region. Thus, within this region there are a total of ten operational sites with operational equipment maintained by a first maintenance depot **112** and a second maintenance depot **113.** Thus, maintenance depot **112** may be responsible for the maintenance of equipment at sites **102** to **106** with maintenance depot **113** being responsible for the maintenance of operational equipment at sites **107** to **111.**

Communication is facilitated by a network **114,** which could be the Internet. An Internet protocol communication channel **115** supplies data from site **102** via network **114** to the maintenance scheduling station **101.** Similar provision is provided for sites **103** to **111.** Operational data is continually supplied to the maintenance scheduling station **101** where the data is collected and processed. Thus, maintenance scheduling station **101** receives data from network **114** via an Internet protocol communication channel **115.** After data has been processed, a maintenance scheduling station **101** supplies maintenance schedules, via internet protocol communication channel **115** and network **114,** to maintenance depot **112** over a communication channel **116** and to maintenance depot **113** over a communication channel **117.** In an embodiment, maintenance scheduling station **101** supplies maintenance schedules to all maintenance depots nationally.

### Figure 2

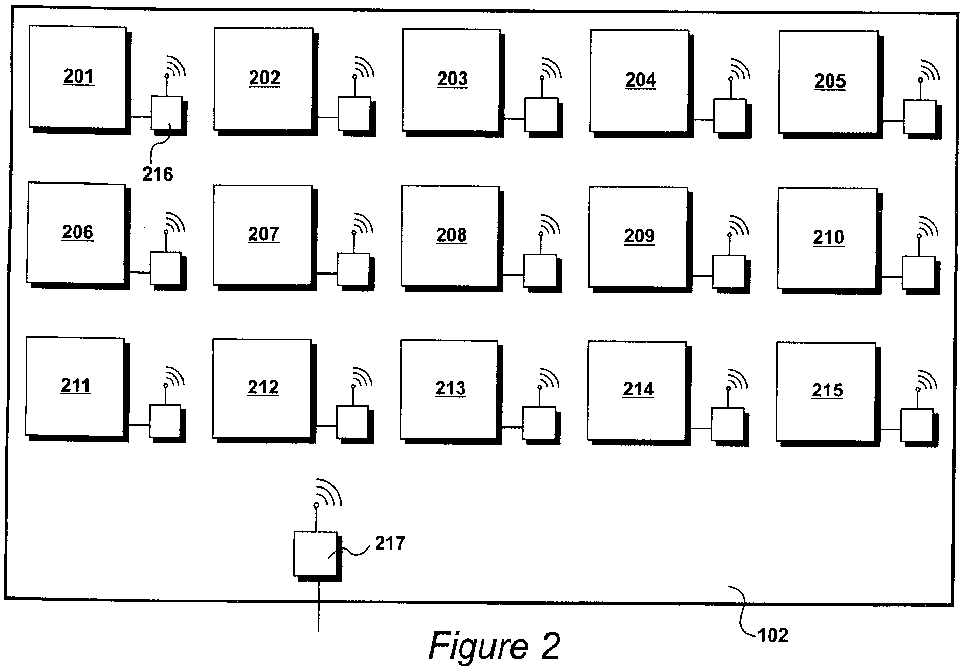

Operational site **102** is detailed in Figure 2. In this example, site **102** includes fifteen operational equipment items, referenced **201** to **215.** Each operational equipment item includes a remote monitoring device **216** which, in this example, monitors a respective elevator but, within a commercial building, equipment of this type could also monitor escalators, fridge's, freezers, cold rooms lighting and heating etc.

Each remote monitoring device **216** monitors and records events such as indicating that the elevator is running, the condition of the doors as to whether they are opened or closed and an indication as to whether any button has been pressed. The state of the machine is noted to the effect that the machine has power and is ready for use. Alternatively, the machine may be in a condition of use and cycle times may be identified. However, in alternative applications, other parameters could be monitored, such as temperature and humidity for example.

In an embodiment, the remote monitoring devices **216** include a ZigBee® interface however, alternative radio particles could be deployed or wired protocols could be deployed.

In the embodiment, the remote monitoring devices **216** push packets of data to a gateway **217** present within a ZigBee® mesh network. From gateway **217,** packets of data are pushed to the maintenance scheduling station **101** by communication via communication channel **115,** network **114** and communication channel **116.**

### Figure 3

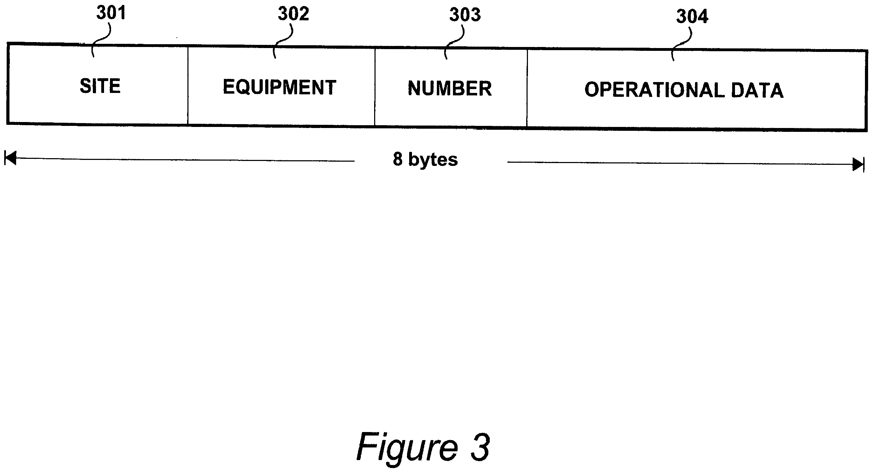

An example of a packet, of the type generated by a remote node (a remote monitoring device **216),** is illustrated in Figure 3. In this example, the packet includes a total of eight bytes of data but it should be appreciated that packet lengths may vary according to application.

In this example, each packet includes a unique number **301** identifying the particular site, such as site **102.** A unique number **302** identifying a specific item of equipment, such as equipment **201,** generating the data. The packet also includes a sequence number **303** identifying the position of a packet within a sequence of transmitted packets from a particular node **216.** This is then followed by operational data **304** relevant to the particular equipment under consideration.

In an embodiment, it is possible for a substantial number of events to be held in a buffer at each node, such as node **216.** In this way, it is possible for an optimising protocol to be selected to effect the data transfer from each of the individual nodes, via the local gateway, to the national maintenance scheduling station **101.**

### Figure 4

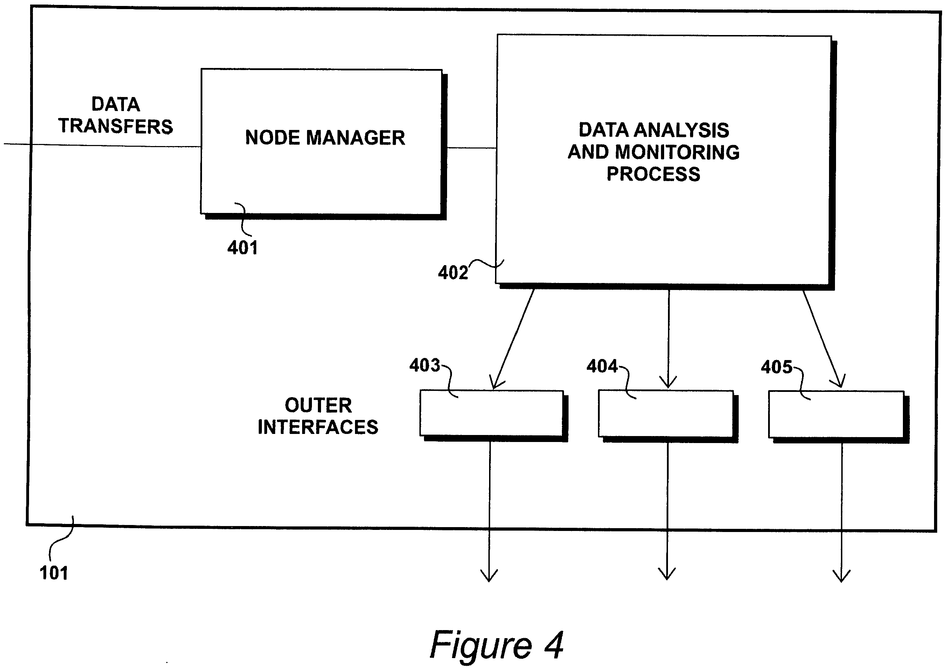

Maintenance scheduling station **101** is detailed in Figure 4. Data transfers in the form of packets (as shown in Figure 3) received from nodes, such as node **216,** are supplied to a node manager **401.** At the node manager **401** the packet is checked for validity and its sequence number **(303)** is compared with the last event received from that particular node. Thus, if the data is received in sequence, the operational data **304** is supplied to a data analysis and monitoring process **402.** The data analysis and monitoring process **402** analyses data to generate information representing the normal operation of the operational equipment. Furthermore, the module **402** also monitors incoming data so as to record unsuspected failure events and to prepare maintenance schedules, primarily in an attempt to prevent failure conditions occurring. The monitoring activity results in the generation of monitored alert conditions and maintenance schedules, produced as output via output interfaces **403, 404** and **405** etc.

### Figure 5

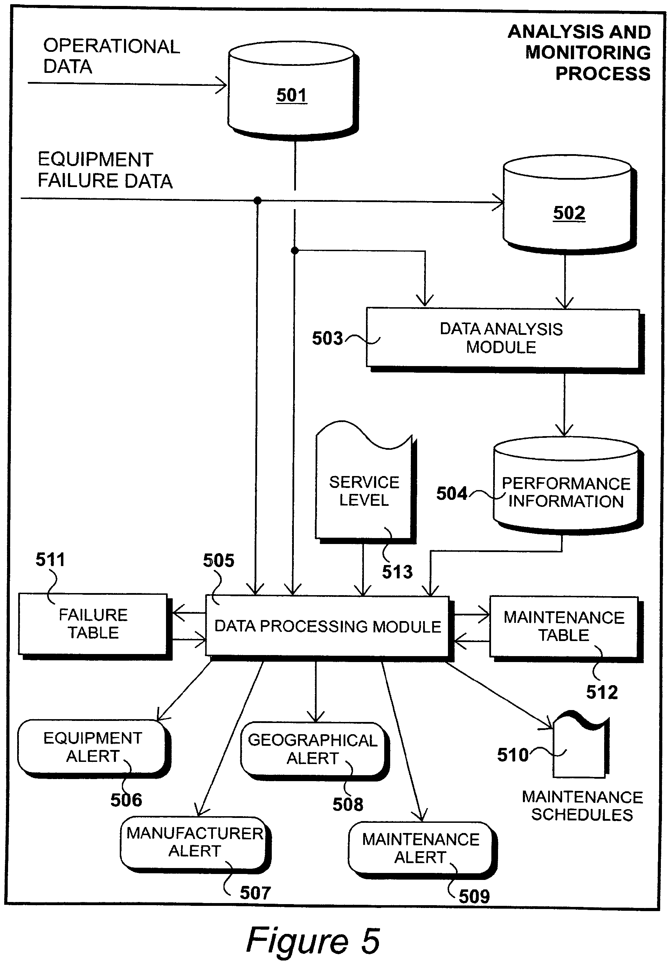

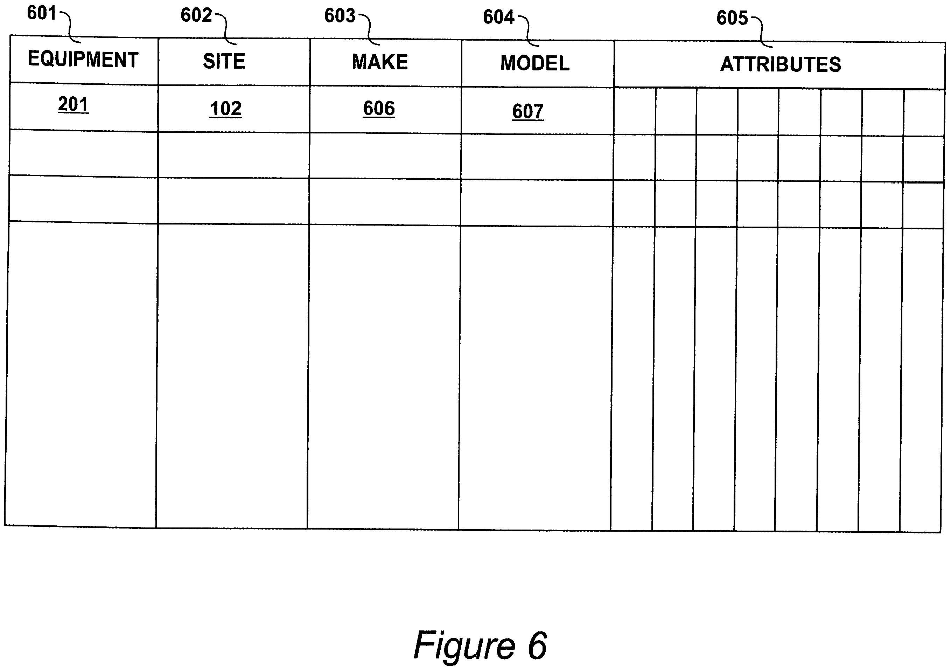

Data analysis and monitoring process **402** is detailed in Figure 5. The scheduling station includes data storage devices which in turn allow the data to be structured in a relational database or equivalent configuration. A schematic overview is shown in Figure 5 with specific database tables and the processes performed upon these tables being illustrated with respect to Figures 6 through to 16.

Operational data from the node manager **401** is written to first storage **501,** and second storage **502** stores equipment failure data for the operational equipment. Equipment failure may be notified by means of a special type of packet indicating a failure condition, to the effect that the operational equipment has ceased functioning. Alternatively, other means of communication may be provided to indicate that a failure has occurred. This may include manual intervention. Under normal operation, the volume of operational data should be quite large with the volume of equipment failure data being relatively small.

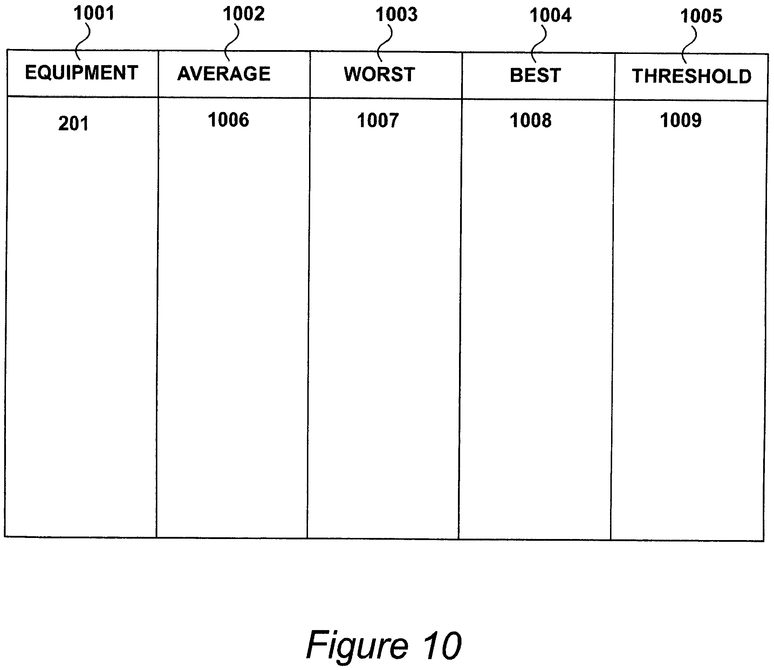

A data analysis module **503** analyses the operational data (from store **501)** in combination with the equipment failure data (from store **502)** to determine performance information relating extensive use of the operational equipment to rates of failure of the operational equipment. Third storage **504** is provided for storing this relationship information (as illustrated in Figure 10).

A data processing module **505** is configured to monitor new operational data and new equipment failure data with reference to the performance information (from store **504)** to produce knowledge-based output alerts **506** to **509** and maintenance schedules **510.**

Relationship information **504** is generated, particularly during an initial learning phase, each time an operational equipment failure datum is received. From this, it is possible to calculate an average extent of use to failure value for inclusion as part of the performance information. Dependent upon operational characteristics, the average extent of use to failure may be calculated as a mean, a median or a modal average. In many examples, the characteristics of failure may follow a Gaussian or normal distribution. Thus having calculated a mean value, say, it is also possible to calculate standard deviation values for example. In some situations, it may be desirable to calculate and maintain records of maximum extent of use and minimal extent of use before failure occurred. Thus, these would represent extreme examples where very high confidence values could be determined with respect to a failure being unlikely to occur or with respect to a failure being highly likely to occur.

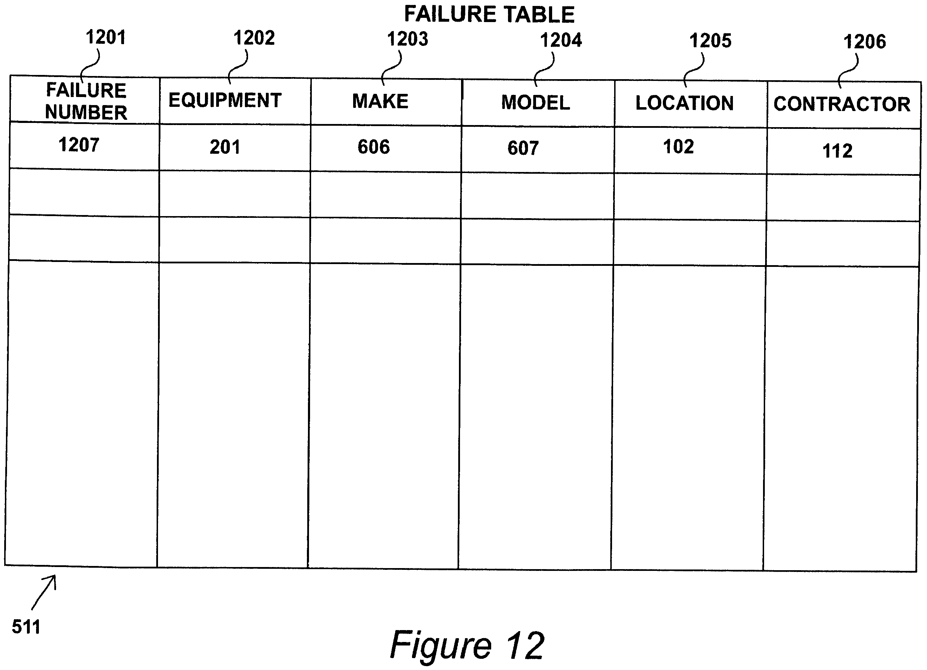

Having established a substantially steady state operating condition, equipment failure conditions should be reduced by the establishment of appropriate maintenance schedules **510.** However, upon receiving a new operational equipment failure datum, new operational data is processed and a failure table **511** is populated with a new failure record, as detailed in Figure 12. In an embodiment, the failure record identifies an equipment type, a manufacturer, location and a maintenance team responsible for maintenance. After a period of time, the maintenance table is processed by the data processing module **505** to produce an equipment alert **506,** a manufacturer alert **507,** a geographical alert **508** and a maintenance alert **509.** Thus, having encountered failure conditions and recorded details of these failure conditions, the data processing module processes many of these conditions to identify potential causes. Thus, if a particular type of equipment tends to fail more often than previous tests would suggest, an equipment alert is generated at 506. If equipment from a particular manufacturer tends to fail more often than expected, a manufacturer alert is generated at **507.**

Failures may also occur in some geographical areas more often than they should. Thus, at a particular site, it is possible for power supply problems to exist which in turn may result in a higher incidence of failures. This results in the generation of a geographical alert **508.** Thus, in response to such an alert occurring, it may be appropriate to take action in terms of addressing the local power supply issue rather than seeking problems with respect to the equipment itself.

To produce maintenance schedules **510,** the data processing module **505** takes an intermediate step of producing a maintenance table **512.** An item of operational equipment is selected and stored operational data for the selected item of operational equipment is reviewed. An assessment is made of an extent of use of the selected item of operational equipment since last maintained. From this, it is possible to select a period for the next maintenance activity to be performed. Furthermore, in terms of identifying a period for the next maintenance activity, reference may be made to a service level agreement **513.** If a low level of service has been agreed, to the effect that failures are to be tolerated, maintenance may be delayed. Alternatively, if a high level of service is required, the maintenance period may be advanced. Thus, in critical applications, a high level of service may be specified such that higher maintenance charges will be submitted but equipment failures should be almost eliminated. Similarly, in situations where equipment is useful but by no means essential, a lower level of maintenance could be tolerated on the bases that equipment failure will not result in critical operational downtime.

### Figure 6

The data analysis module **503** includes an equipment attribute table, as illustrated in Figure 6. A column **601** records unique equipment numbers, such as equipment **201,** communicating with node **216.** In a column **602,** the location of the equipment is recorded, such that equipment **201** is located at site **102.** At column **603** the make **606** of the equipment is recorded followed, in column **604,** with the specific model **607** of the equipment. The table then include further columns **605** for additional attributes of the equipment to be recorded. This allows, for example, each equipment to be placed in a user defined category. In addition, the attribute status **605** allow a record to be made of any modifications or specific configurations for a particular application.

All of the attribute data illustrated in Figure 6 allows analysis to be performed to identify patterns that may suggest a particular reason for failures occurring or for the equipment not functioning at its optimum level of performance.

### Figure 7

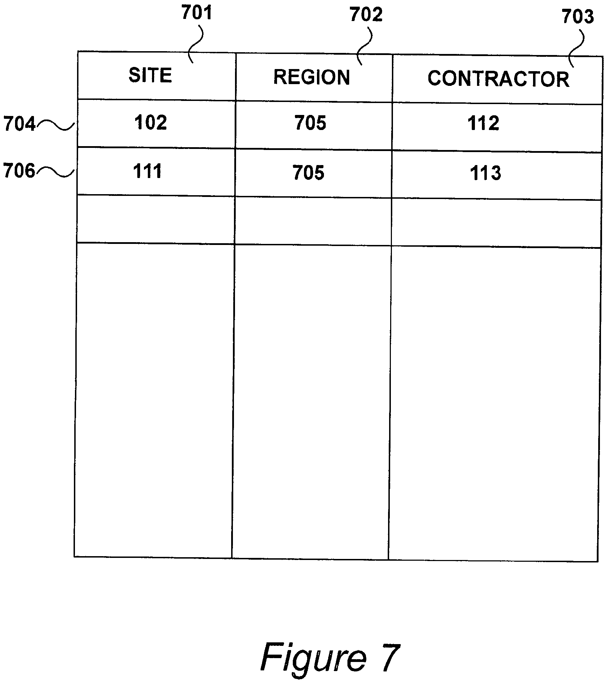

Data analysis module **503** also includes a contractor table, as illustrated in Figure 7. The contractor table of Figure 7 includes a column **701** identifying a particular site, a column **702** identifying a region for that site and a column **703** identifying the contractor or depot responsible for maintenance of the equipment at that site.

In this example, record **704** identifies site **102** which is then identified as being in region **705.** As illustrated in Figure 1, maintenance depot **112** is responsible for maintenance at site **102.**

Record **706** identifies site **111,** also located within region **705.** However, on this occasion, maintenance at site **111** is performed by maintenance depot **113.**

### Figure 8

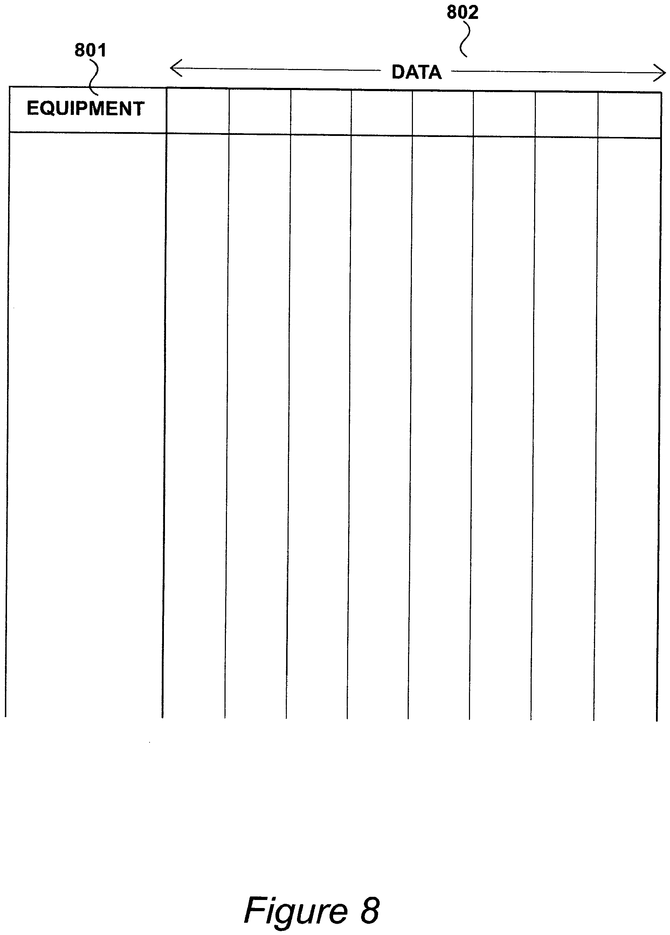

Operational data is received by data storage **501,** as illustrated in Figure 5 and recorded in a table of the type illustrated in Figure 8. A column **801** provides a unique identification for the equipment, which can be related to the data contained in the table of Figure 6. Columns **802** receive the operational data **304** from the node manager **401.**

In an embodiment, all of the data is sent to storage **501** irrespective of the actual equipment type. Typically, any information that may be supplied to a local control panel, such as to say that the machine is running, doors have been opened or closed or a particular button has been pressed for example will be recorded at a node (say node **216),** supplied to the node manager **401** in the form of a packet of the type illustrated in Figure 3 and then written to the data table as illustrated in Figure 8. Thus, each data event results in the table of Figure 8 being populated. Consequently, equipment that incurs greater use will result in a greater number of data entries being present within the table shown in Figure 8. This in turn provides a record of equipment use which may be considered when equipment failure occurs.

In an embodiment, the environment is installed in situations where repairs and maintenance are prompted by a system failure. A purpose of the environment illustrated herein is to anticipate these failures and thereafter deploy proactive maintenance. This in turn allows the maintenance operations to be co-ordinated, optimised and thereby made more efficient. Furthermore, maintenance schedules may be modified in line with a service level agreement such that, in response to a high price being paid, continuing service is guaranteed to a higher level of satisfaction and the rate of failure is reduced.

Upon installation of the environment, a period exists during which it is necessary to capture data and thereafter respond to failure events as before. Thus, in this initial period, failure events are captured and the usage data is analysed. Thereafter, during the second phase of maintenance scheduling, usage data is analysed as usage takes place and maintenance schedules are generated in an attempt to minimise failure conditions.

### Figure 9

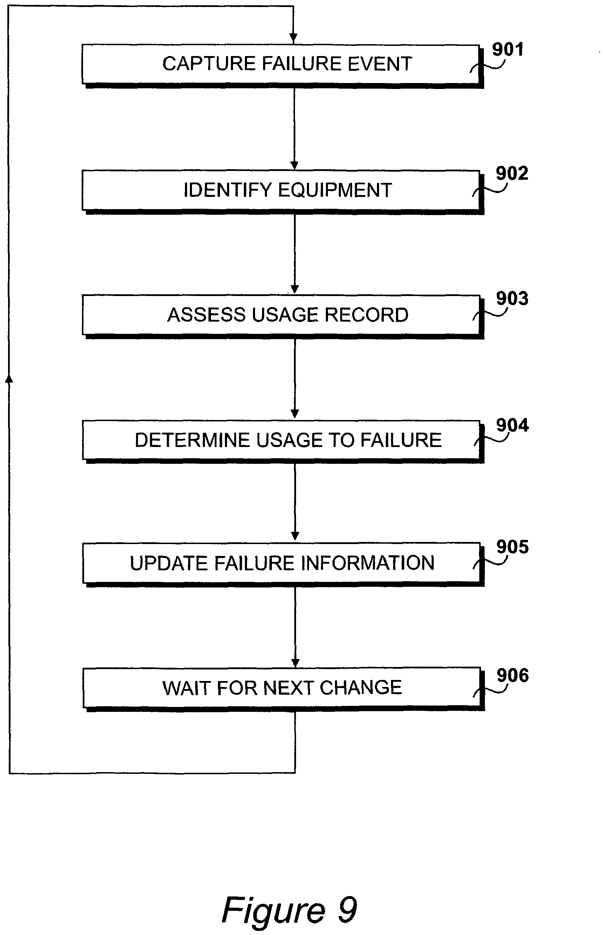

A first stage of data analysis is illustrated in Figure 9. For a first mode of operation, involving data analysis, data is supplied to the data analysis module via storage **502.** At the data analysis module, a failure event is captured at **901** and at step **902** the particular equipment concerned is identified.

At step 903 the equipment usage table of Figure 8 is assessed to identify the extent of usage that has taken place since the equipment was last maintained.

At step **904** a determination is made as to the extent of usage performed up to the point of failure. At step **905** a failure information table is updated (as detailed in Figure 10) whereafter at step 906 the system waits for the next failure event to occur.

### Figure 10

An equipment performance table is shown in Figure 10, which is stored in performance information storage **504,** having been produce by the data analysis module **503.** A column **1001** identifies a particular item of equipment and at column **1002** an average number of operations **1006** to failure is recorded. At column **1003** a worst example of failure **1007** is recorded and at column **1004** a best period to failure is recorded. At column **1005** a threshold value **1009** is recorded which is a value, as determined by the data analysis module, representing a threshold which, if exceeded, should prompt a routine maintenance operation to be scheduled.

In the example shown, a failure condition has been identified for equipment **201.** On the first occurrence of an equipment failure, the average value, the worst value and the best value will be the same and meaningful results are only achieved after several failures have occurred. However, the information content of the data set may be enhanced by combining results received from similar equipment located elsewhere. Thus, at any instance, it is possible for an optimised average value, worse value, best value and threshold level to have been calculated, which are then updated as further data instances are received.

Over time, the performance information **504** will provide a review of what is considered to be normal operation for the operational equipment in the field. From this, two fundamental elements of knowledge may be derived. Firstly, it is possible to monitor the ongoing usage of the operational equipment, from which it is possible to generate maintenance schedules in order to optimise the maintenance operations. Furthermore, by monitoring further failures when they do occur, an assumption may be made to the effect that failures should not have occurred. Consequently, it is possible to enhance the knowledge-base by investigating possible unusual reasons for failure, such as a problem with a particular equipment type a problem with a particular manufacturer, a problem with a particular geographical area or a problem with a particular maintenance depot.

### Figure 11

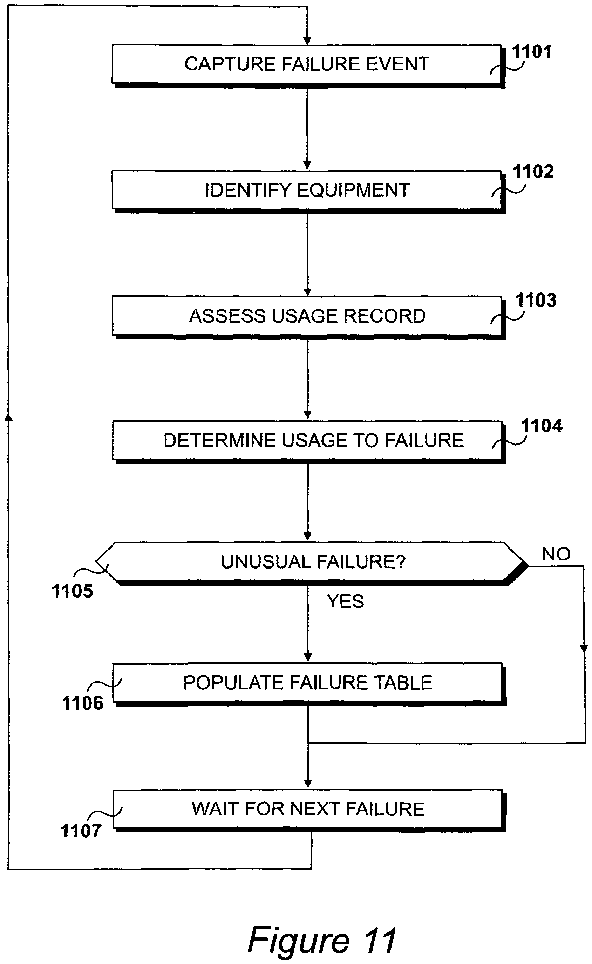

In addition to equipment failure data being supplied to storage **502,** equipment failure data is also supplied to data processing module 505. This facilitates a second mode of operation, shown in Figure 11, in which unusual failure conditions are identified.

At step **1101** a failure event is captured and at step **1102** the failing equipment is identified.

At step **1103** the usage record is assessed and at step **1104** the amount of usage that has taken place prior to the failure occurring is determined. Thus, at step **1104** it is possible to identify the amount of usage that has taken place since the last maintenance exercise was performed and then by referring to performance information **504** it is possible to determine whether this was an unusual failure or whether the failure did occur within established parameters.

Having had the environment operational for a significant period of time, failures should not occur; as the scheduling of regular maintenance operations becomes more effective, failure occurrence should reduce.

A question is asked step **110**5 as the whether the failure is considered to be unusual. If answered in the affirmative, to the effect that the failure was not expected, a failure record is populated at step **110**6**.**

Alternatively, the question asked at step **110**5 may be answered in the negative. A failure may have occurred, for example, for an item of equipment for which the agreed service level was relatively low. Thus, under these circumstances, it is accepted that failures will occasionally occur and the question asked at step **110**5 will be answered in the negative. Thus, under these circumstances, the system again waits for the next failure to occur.

### Figure 12

Failure table **511** is detailed in Figure 12. Column **120**1 allocates a unique failure number for each failure that occurs. Column **120**2 identifies the particular equipment that has failed and column **120**3 records the make of the equipment. Similarly, column **120**4 records the model of the equipment, column **120**5 records the location of the equipment and column **1206** records the contractor 0r depot responsible for maintaining the equipment.

Step **110**6 populates the failure table **511** and in the example, unique failure **120**7 is recorded. This relates to equipment **201** having make 606 and model **607.** It is to be found at location 102 and it is maintained by depot **112.** Thus, table **511** continues to be populated each time an unusual failure is detected.

### Figure 13

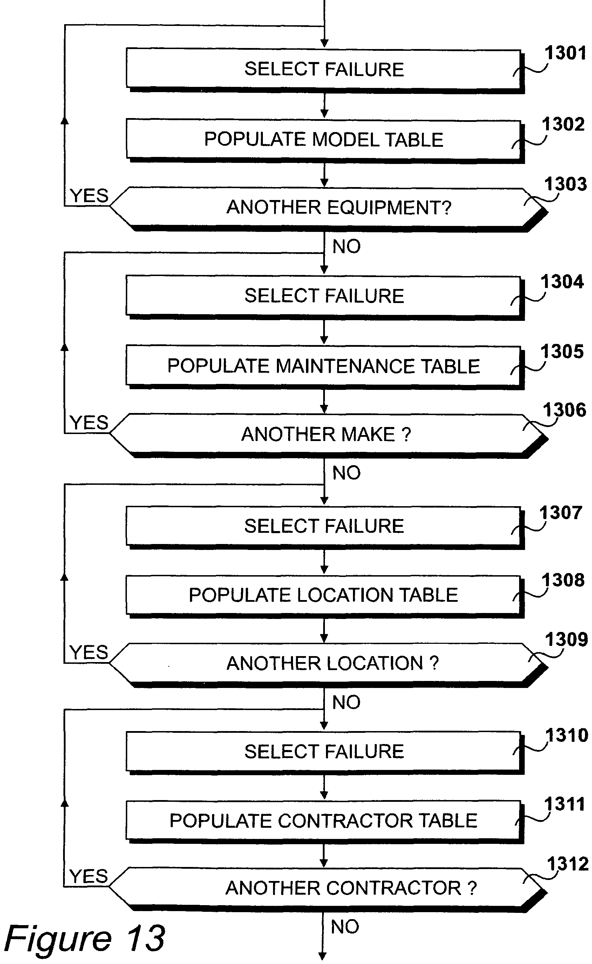

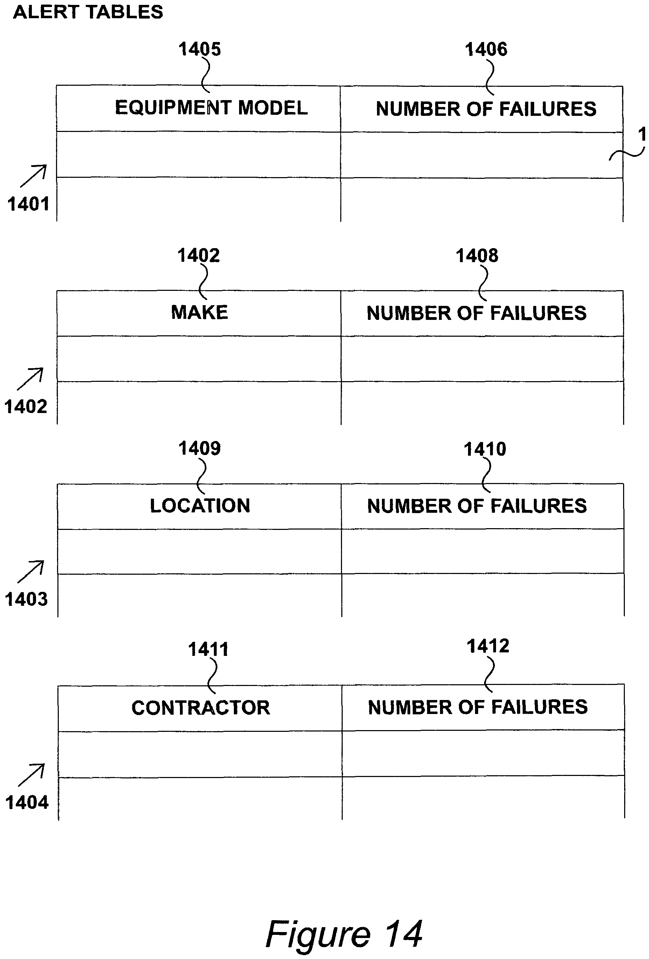

Periodically or in response to a large number of unusual failures occurring, the failure table **511** is analysed by the data processing module **505**, following the process detailed in Figure 13, which results in the populating of alert tables as illustrated in Figure 14. These in turn may result in the generation of an equipment alert **506,** a manufacturer alert **507** a geographical alert 508 or a maintenance alert **509.**

The process detailed in Figure 13 systematically reviews the failures with respect the their make, model, location and contractor.

At step **130**1 a particular equipment model is selected from column **1204.** At step **130**2 model table **140**1 is populated. A question is then asked as to whether another equipment is present at step **130**3 and when answered in the affirmative the next equipment is selected. This process continues until all failures have been considered and responsible equipment models have been recorded. Thus, eventually, all of the failures will have been considered and the question asked at step **130**3 will be answered in the negative.

At step **130**4 a particular make or manufacturer is selected and at step **130**5 a make table **140**2 is populated. A question is asked whether another make is present at step **130**6 and when answered in the affirmative the next failure is selected at step **130**4**.** Again, this process continues until all of the failures have been considered, resulting in the question asked at step 1306 being answered in the negative.

At step **130**7 a first failure is selected and at step **130**8 the location of the failure results in a table **140**3 being populated. Again, a question is asked at step **130**9 as to whether another location exists and when answered in the affirmative the next failure is selected at step **130**7. Eventually, all of the failures will have been considered with respect to location and the question asked at step **130**9 is answered in the negative.

At step **131**0 a first failure is again selected, this time with reference to the contractor involved. At step **131**1 a table **140**4 is populated with details of the contractor and at step **131**2 a question is asked as to whether another failure is to be considered with respect to the contractor involved. When answered in the affirmative, the next failure is selected at step **131**0 and alert table **140**4 is populated. Eventually, all of the failures will have been considered and the question asked at step **131**2 will be answered in the negative.

### Figure 14

Alert tables **140**1 for equipment model, **140**2 for make or manufacturer, **140**3 for location and **140**4 for contractor are detailed in Figure 14. In column **140**5 of table **140**1 equipment models are listed. Thus, each entry identifies a unique equipment model not individual examples of models. Thereafter, in column **140**6, against each equipment model the number of failures are recorded. This could represent the absolute number of failures or the average number of failures, so as to facilitate comparison. Again, a threshold could be set and if average unexpected failures exceed this threshold, an equipment alert could be generated at **506.** This could result in enquires being made in relation to the particular equipment type or a flag could be raised to the effect that the equipment type was considered less desirable for future purchases.

Alert table **140**2 records the manufacturer at column **140**7, followed by an average number of failures at column **140**8. Thus, again, particular manufacturers could be ranked in terms of their average unexpected failures and manufacturers achieving lower scores would be seen as a more desirable source when purchasing decisions are being made.

Alert table **1403** includes a column **1409** for identifying particular locations, such as location **102,** again followed by an indication of failures **141**0. Usually, an operator would not expect a higher degree of failures to occur at a particular geographical location. However, should a situation of this type arise, it may prompt further investigations as to whether any other external factors may be causing the problems, such as disrupted power supplies or, for a particular location, whether it would be preferable to change the type of equipment deployed. For example, a change may have occurred in terms of the type of work being carried out at a particular location, possibly placing higher demands upon the operational equipment being monitored.

Alert table **1404** includes a column **1411** for identifying the particular contractor or maintenance depot, followed by column **1412** identifying the number of failures that have occurred. Again, it is not expected for wide discrepancies to occur but if a particular contractor does appear to be having higher than expected failure rates, further investigations may be performed to consider the practices of the depot concerned.

Thus, for manufacturers having high failure rates, a manufacturer alert **507** is created. For a geographical location having high failure rates, a geographical alert **508** is generated and for a maintenance depot having a high degree of failures a maintenance alert **509** is generated.

### Figure 15

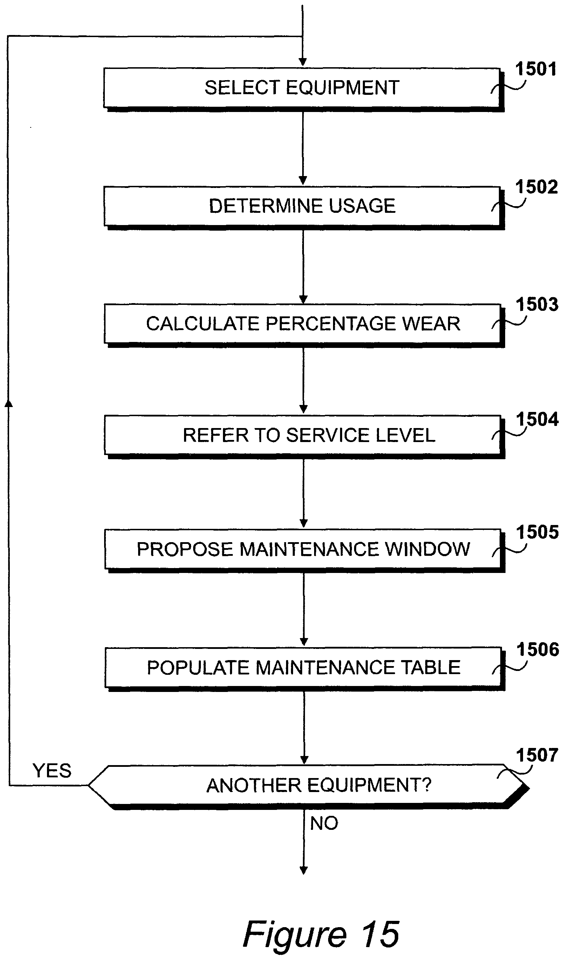

In what may be considered as second stage steady state operationality, the data processing module **505** reads operational data from storage **501** in order to produce maintenance schedules **510.** The maintenance schedules **510** are generated with reference to a maintenance table **512** and procedures for generating maintenance table **512** are detailed in Figure 15.

At step **150**1 the processing module **505** selects a particular equipment installation, with reference to the table shown in Figure 6.

At step **150**2 the processing module **505** makes reference to the operational data in storage **501** in order to determine the extent of usage of the equipment since the last maintenance exercise.

At step **150**3, with reference to the performance information **504,** the data processing module **505** calculates a wear percentage, representing the extent of wear expected based on the level of usage where a one hundred percent value would indicate that a maintenance exercise was required, otherwise failure was likely to occur.

At step **150**4 reference is made to the service level data **513.** The service level reference may result in a determination being made to the effect that a maintenance trip should be scheduled when seventy-five percent wear is encountered (a high level of service) or to the effect that a maintenance trip should be scheduled when ninety-five percent wear has been detected, representing a low level of service.

Having made a determination of the extent of wear (possibly modified) a maintenance window is proposed at step **150**5. This results in maintenance table **512** being populated if a maintenance visit is required over the next service interval.

A question is asked at step **150**7 as to whether another equipment is to be considered and when answered in the affirmative control is returned to step **150**1. Thus, the next equipment in the table of Figure 6 is considered and an assessment is made as to whether a maintenance visit requires scheduling.

### Figure 16

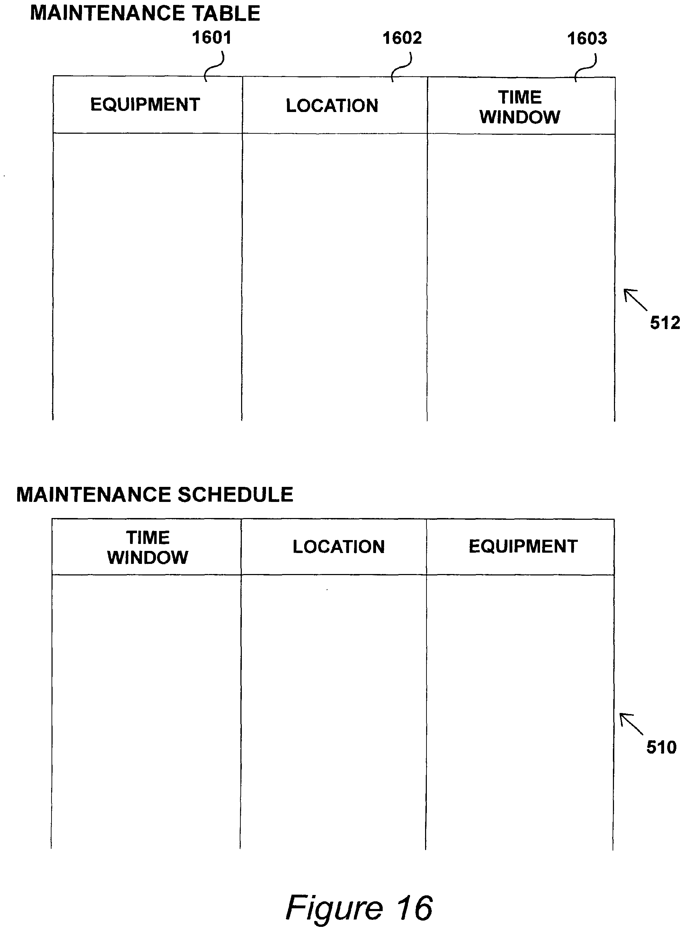

Maintenance table **512** and an example of a maintenance schedule 510 are shown in Figure 16.

The maintenance table **512** includes an equipment column **160**1, a location column **160**2 and a time window column **160**3.

Following the deployment of the procedure detailed in Figure 15, equipment **201** has been selected which is present at location **102.** An assessment has been made to the effect that it would be preferable to conduct a maintenance exercise within the next three weeks therefore the time window is identified as week 3.

After fully populating maintenance table **512,** the data is reorganised to create maintenance schedules **510.** A maintenance schedule is produced for each maintenance depot **112.** This in turn may be broken down to a maintenance schedule for each working day or week within each maintenance depot **112.** Thus, for the purposes of illustration, the maintenance schedule shown in Figure 16 may be considered as that for maintenance depot **112** during week three thus, during week three, maintenance is required at location **102** with respect to equipment **201.**

Thus, in an embodiment, a maintenance schedule **510** identifies work intervals, geographical locations within these work intervals and operational equipment to be maintained within each of the geographical locations. The maintenance schedule is produced periodically by reviewing the stored operational data indicating operations performed by the operational equipment. An extent of use is calculated for an item of operational equipment and the next work interval is identified during which a maintenance activity will be required. It is also possible for the next work interval to be identified with reference to an agreed service level.

## Claims

1. A method of scheduling the maintenance of operational equipment distributed over a plurality of locations, comprising the steps of:
receiving operational data relating to use of operational equipment;
receiving operational equipment failure data;
analysing said operational data in combination with said operational equipment failure data to determine performance information relating extent of use of said operational equipment to rates of failure of operational equipment; and
processing new operational data and operational equipment failure data in combination with said relationship information to produce knowledge-based output alerts and maintenance schedules.

2. The method of claim 1, wherein performance information is determined upon receipt of an operational equipment failure datum.

3. The method of claim 2, wherein an average extent of use to failure value is calculated as part of said performance information.

4. The method of claim 3, wherein a variance is calculated as part of said performance information.

5. The method of claim 3, wherein a minimum extent of use to failure is calculated and a maximum extent of use to failure is calculated.

6. The method of claim 1, wherein new operational data is processed upon receiving a new operational equipment failure datum and a failure record is added to a failure table.

7. The method of claim 6, wherein said failure record identifies an equipment type, a manufacturer, a location and a maintenance team responsible for maintenance.

8. The method of claim 1, further comprising the steps of:
processing said failure table to produce an equipment alert;
processing said failure table to produce a manufacturer alert;
processing said failure table to produce a geographical alert; and
processing said failure table to produce a maintenance alert.

9. The method of claim 1, further comprising the step of producing a maintenance schedule identifying a list of maintenance operations to be performed over a predetermined period of time.

10. The method of claim 1, wherein said maintenance schedule is produced by:
selecting an item of operational equipment;
reviewing stored operational data for the selected item of operational equipment;
assessing an extent of usage of the selected item of operational equipment since last maintained; and
selecting a period for the next maintenance activity to be performed.

11. The method of claim 9, wherein a maintenance table is produced identifying equipment followed by a maintenance period and said maintenance schedule is produced from said maintenance table showing maintenance periods followed by location followed by an identification of the equipment.

12. The method of claim 9, wherein said maintenance schedule alert is produced with reference to a service level agreement.

13. An apparatus for scheduling the maintenance of operational equipment distributed over a plurality of locations, comprising:
first storage for storing operational data identifying use of operational equipment;
second storage for storing equipment failure data for said operational equipment; and
at least one data analysis processor configured to analyse said operational data in combination with said equipment failure data to determine performance information relating extent of use of said operational equipment to rates of failure of said operational equipment;
third storage for said performance information; and
at least one data monitoring processor configured to monitor new operational data and new equipment failure data with reference to said performance data to produce knowledge-based output alerts and maintenance schedules.

14. The apparatus of claim 13, wherein each said operational equipment includes at least one electric motor and said real-time operational data identifies activations of some or all of said electric motors.

15. The apparatus of claim 14, wherein said operational equipment includes operational mechanics driven by said electric motors and said operational equipment failure data includes data relating to failure of said electric motors and failure of said operational mechanics.

16. The apparatus of claim 13, including a data collector located at each item of operational equipment.

17. The apparatus of claim 16 including a data gateway at each geographical location, wherein data collectors communicate with said data gateway by radio data transmission.

18. The apparatus of claim 16, wherein said data collectors store and forward packets of data, wherein each said packet of data includes an identification of the respective item of operational equipment, data relating to the operation of said operational equipment and a number identifying the position of the packet in a sequence of transmitted packets.

19. A maintenance schedule identifying work intervals, geographical locations within said work intervals and operational equipment to be maintained within each said geographical locations, wherein said maintenance schedule is produced periodically by performing the steps of:
reviewing stored operational data indicating operations performed by said operational equipment;
calculating an extent of use for an item of operational equipment; and
identifying the next work interval during which a maintenance activity will be required.

20. The maintenance schedule of claim 19, wherein said step of identifying the next work interval is performed with reference to an agreed service level.
